(19) **Europäisches Patentamt**

**European Patent Office**

**Office européen des brevets**

(11) **EP 1 512 845 A1**

(12) **EUROPEAN PATENT APPLICATION**

(43) Date of publication:
**09.03.2005 Bulletin 2005/10**

(51) Int Cl.⁷: **F01L 1/34**, F02D 41/34,
G01D 5/245

(21) Application number: **04254912.1**

(22) Date of filing: **16.08.2004**

| | |
|---|---|
| (84) Designated Contracting States:<br>**AT BE BG CH CY CZ DE DK EE ES FI FR GB GR HU IE IT LI LU MC NL PL PT RO SE SI SK TR**<br>Designated Extension States:<br>**AL HR LT LV MK** | (72) Inventors:<br>• **Zhenyu, Jiang**<br>**Ithaca New York 14850 (US)**<br>• **Stanley, B., Quinn, Jr.**<br>**Elmhurst Illinois 60126 (US)** |
| (30) Priority: **05.09.2003 US 500840 P**<br>**29.06.2004 US 880206** | (74) Representative: **Lerwill, John et al**<br>**A.A. Thornton & Co.**<br>**235 High Holborn**<br>**London, WC1V 7LE (GB)** |
| (71) Applicant: **BorgWarner Inc.**<br>**Auburn Hills, Michigan 48326-1782 (US)** | |

(54) **A method to measure vct phase by tracking the absolute angular positions of the camshaft and the crankshaft**

(57)    A method is provided for measuring the phase relationship between the two shafts. The method includes: providing a first index means on the first pulse wheel; providing a second index means on the second pulse wheel; generating a first sequence of pulses based upon the characteristics of the first pulse wheel including the first index means thereon; generating a second sequence of pulses based upon the characteristics of the second pulse wheel including the second index means thereon; and determining a phase relationship between the two shafts based on part, or all pulses generated by the two pulse wheels, thereby having a measurement accuracy determined by the wheel that generates the most pulses.

EP 1 512 845 A1

**Description**

BACKGROUND OF THE INVENTION

FIELD OF THE INVENTION

The invention pertains to the field of variable cam timing systems. More particularly, the invention pertains to a method of calculating the VCT phase by measuring the absolute angular positions of the camshaft and the crankshaft of an internal combustion engine.

DESCRIPTION OF RELATED ART

Internal combustion engines have employed various mechanisms to vary the angle between the camshaft and the crankshaft for improved engine performance or reduced emissions. The majority of these variable camshaft timing (VCT) mechanisms use one or more "phasers" on the engine camshaft (or camshafts, in a multiple-camshaft engine). In "vane phaser" systems, the phasers have a rotor with one or more vanes, mounted to the end of the camshaft, surrounded by a housing with the vane chambers into which the vanes fit. It is possible to have the vanes mounted to the housing, and the chambers in the rotor, as well. The housing's outer circumference forms the sprocket, pulley or gear accepting drive force through a chain, belt or gears, usually from the crankshaft, or possibly from another camshaft in a multiple-cam engine.

US Patent No. 5,002,023 describes a VCT system within the field of the invention in which the system hydraulics includes a pair of oppositely acting hydraulic cylinders with appropriate hydraulic flow elements to selectively transfer hydraulic fluid from one of the cylinders to the other, or vice versa, to thereby advance or retard the circumferential position of a camshaft relative to a crankshaft. The control system utilizes a control valve in which the exhaustion of hydraulic fluid from one or another of the oppositely acting cylinders is permitted by moving a spool within the valve one way or another from its centered or null position. The movement of the spool occurs in response to an increase or decrease in control hydraulic pressure, $P_c$, on one end of the spool and the relationship between the hydraulic force on such end and an oppositely direct mechanical force on the other end which results from a compression spring that acts thereon.

U.S. Patent No. 5,107,804 describes an alternate type of VCT system within the field of the invention in which the system hydraulics include a vane having lobes within an enclosed housing which replace the oppositely acting cylinders disclosed by the aforementioned U.S. Patent No. 5,002,023. The vane is oscillatable with respect to the housing, with appropriate hydraulic flow elements to transfer hydraulic fluid within the housing from one side of a lobe to the other, or vice versa, to thereby oscillate the vane with respect to the housing in one direction or the other, an action which is effective to advance or retard the position of the camshaft relative to the crankshaft. The control system of this VCT system is identical to that divulged in U.S. Patent No. 5,002,023, using the same type of spool valve responding to the same type of forces acting thereon. US Patent No. 5,002,023 and 5,107,804 are hereby incorporated by reference.

It is well known in the art to attach equally spaced toothed wheels on the camshaft and the crankshaft. A sensor is used to detect the passing of the teeth and to generate a signal representing a position of the crankshaft or the camshaft. An extra tooth may be added or one may be removed. The additional tooth or the missing tooth is called the "index tooth." Various methods exist for identifying the additional tooth on cam and crank wheels and are described in US 5,736,633, and 6,498,980. Various methods for identifying the missing tooth are described in US 5,604,304 and US 6,016,789.

US 5,289,805 uses the elapsed time between the detection of successive crank and cam pulses to measure the phase. This method limits the range of measurements to 720 crank degrees divided by the number of cam sensor wheel teeth. This method also requires that the teeth in both the crank wheel and the cam wheel be equally spaced and that the number of cam teeth is twice the number of crank teeth due to the fact that the crankshaft turns twice for every cam cycle.

US 5,165,271 uses an extra tooth on a crank wheel attached to the crankshaft to identify a cylinder's top dead center. A sensor produces pulse signals for each tooth that passes the sensor. The sensor produces a timing reference signal when the additional tooth passes the sensor. From the timing reference signals, a speed signal is produced corresponding to the speed of the engine. US 5,165,271 does not contain a phaser and the internal combustion engine does not have variable cam timing and therefore, absolute position of the camshaft and crankshaft cannot be obtained.

US 6,609,498 teaches a target wheel calibration method and apparatus used to detect camshaft and crankshaft timing, position and speed for a four cycle internal combustion engine. The method relied on the cam and crank wheels to have a 2 :1 tooth spacing which may be susceptible to faulty readings when the teeth pass by the sensor. C of C/D =E/F (column 4, line 24) where C is the crankshaft-to camshaft exhaust camshaft angle, may be positive or negative, depending on the cm phaser and the pulse wheel alignment. A method of correcting or detecting this condition is not indicated.

The phaser interposed between the two engaging shafts such as a cam shaft and a crank shaft generally allow a predetermined range of turning, e.g. 45, 60, or 90 degrees. On the other hand, more teeth may be present on pulse wheels for non-VCT use such as cylinder timing, etc. Therefore, it is advantageous to use virtually all the teeth including the extra or non-VCT teeth together with teeth for VCT use to achieve a more accurate measurement and a VCT system operable with a larger predetermined range such as 0-360 degrees instead of say 90 degrees.

Applicant's invention addresses new ways to satisfy the practical requirements for operation without limiting phaser capability. The relationship between the number of teeth is arbitrary, and the method suitable computer use of the present invention is insensitive to crossover (crossover is defined as the wrong or inaccurate measurement of the angular relationshiop between 2 shafts having a phaser interposed therebetween with the phaser incapable of handling larger predetermined range due the inherent nature of the VCT system that occurs when cam shaft travels outside of the predetermined range of turning.

SUMMARY OF THE INVENTION

Two rotating shafts engagable together having a phaser interposed therebetween is provided. Each shaft has a pulse wheel thereon; and each pulse wheel having indicators or teeth thereon. Further, each pulse wheel has an index teeth for indicating information such as how many revolutions the pulse wheel has rotated.

A method utilizing the index teeth on the two wheels respectively is provided for providing information on the angular relationship between the two engagable rotating shafts. For example, the phaser interposed between the two shafts is disposed to be adjustable within a predetermined range. Therefore, it is advantageous to use the two index teeth for measuring or controlling the phase relationship including the part contributed by the phaser.

It should be noted that the method of the present invention contemplates and is capable of measuring a wider predetermined range than known methods, i.e. 360 degrees. This is due to the fact that each pulse wheel has an index tooth for indicating the number of rotations.

In addition, the spacing of teeth on the pulse wheel can either be evenly distributed with the exception of the index tooth. Or, alternatively the pulse wheel can be unevenly distributed having a designated tooth predetermined as the index tooth.

In a VCT system having two rotating shafts interposed by a phaser, each shaft having a pulse wheel with an index tooth, a method is provided for measuring the phase relationship between the two shafts in which the measuring accuracy is limited only by the resolution of the timer used to record the time stamp of the pulses and the small amount of shaft speed fluctuation between two consecutive pulses generated from the more densely toothed pulse wheel.

In a VCT system having two rotating shafts interposed by a phaser, each shaft having a pulse wheel with an index tooth, a method is provided for measuring the phase relationship between the two shafts in which the measuring range is up to +/- 360 crank degrees or a full cam revolution.

In a VCT system having two rotating shafts interposed by a phaser, each shaft having a pulse wheel with an index tooth, a method is provided for measuring the phase relationship between the two shafts in which the index tooth can be either an extra tooth, or a missing tooth.

The present invention is suitable for a VCT system having variable speed adjustment as well as constant speed adjustment with a predetermined range of 0 to 360 degrees. Furthermore, the present invention is to be separately incorporated into subroutines such as crank subroutine, and cam subroutine which are executed within crank interrupt routine and cam interrupt routine.

Accordingly, in a system having a first rotating shaft, a second rotating shaft, and a phaser interposed between the first shaft and the second shaft, each shaft having a pulse wheel rigidly affixed onto the shaft disposed to generate pulses based upon the characteristics of the pulse wheel. A method is provided for measuring the phase relationship between the two shafts. The method includes: providing a first index means on the first pulse wheel; providing a second index means on the second pulse wheel; generating a first sequence of pulses based upon the characteristics of the first pulse wheel including the first index means thereon; generating a second sequence of pulses based upon the characteristics of the second pulse wheel including the second index means thereon; and determining a phase relationship between the two shafts based on part, or all pulses generated by the two pulse wheels, thereby having a measurement accuracy determined by the resolution of the timer used to record the time stamp of the pulses and the small amount of shaft speed fluctuation between two consecutive pulses generated from the more densely toothed pulse wheel.

Accordingly, a method is provided for tracking absolute angular positions of both a camshaft and a crankshaft of variable camshaft timing system having a phaser for an internal combustion engine having at least one camshaft. The method includes the steps of: a) sensing an index tooth on a cam sensor wheel and a crank sensor wheel, wherein the sensor wheels have a plurality teeth including the index tooth; b) calculating the absolute cam position and an absolute crank position; c) calculating the phase between the cam and the crank; d) comparing the calculated phase to a predetermined set of phase; and e) calculating the adjusted phase.

BRIEF DESCRIPTION OF THE DRAWING

Fig. 1      shows an overall flowchart of an embodiment of the present invention.

Fig. 2      shows a crank wheel attached to crankshaft with a missing tooth as the index tooth.

Fig. 3      shows a cam wheel attached to camshaft with an additional tooth as the index tooth.

Fig. 4      shows the relationship of camshaft and crankshaft pulses.

Fig. 5      shows a flowchart for phase adjustment.

Fig. 6      shows a flowchart for automatic initial phase calibration.

Fig. 7      shows a flowchart for phase calculation.

Fig. 8      shows a flowchart for crank interrupt service routine.

Fig. 9      shows a flowchart for cam interrupt service.

Fig. 10     shows a flowchart for phase calculation routine and the interface between the crank interrupt routine, the cam interrupt routine, and the phase calculation routine.

DETAILED DESCRIPTION OF THE INVENTION

This section includes the descriptions of the present invention including the preferred embodiment of the present invention for the understanding of the same. It is noted that the embodiments are merely describing the invention. The claims section of the present invention defines the boundaries of the property right conferred by law.

In a variable cam timing (VCT) system, the timing gear on the camshaft is replaced by a variable angle coupling known as a "phaser." Vane-type phasers have a rotor connected to the camshaft and a housing connected to (or forming) the timing gear, which allows the camshaft to rotate independently of the timing gear, within angular limits, to change the relative timing of the camshaft and crankshaft. The term "phaser", as used here, includes all of the parts to control the relative angular position of the housing and rotor, to allow the timing of the camshaft to be offset from the crankshaft. In any of the multiple-camshaft engines, it will be understood that there would be one phaser on each camshaft, as is known to the art.

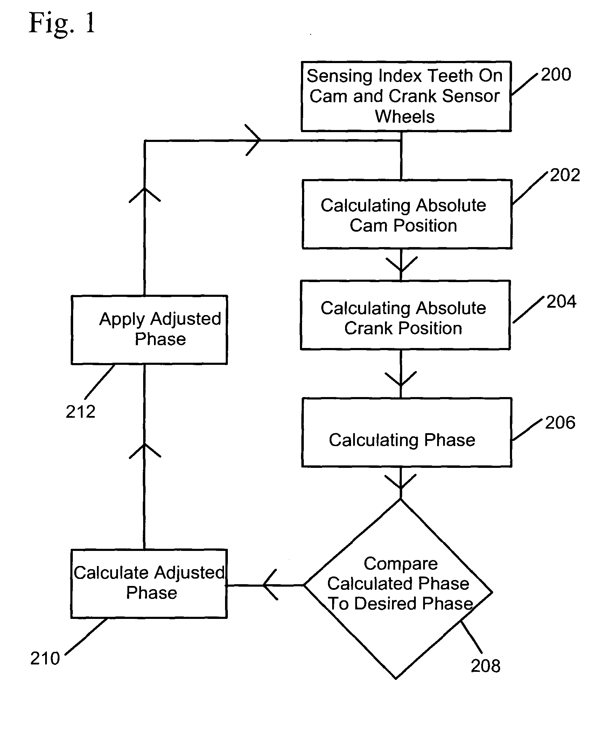

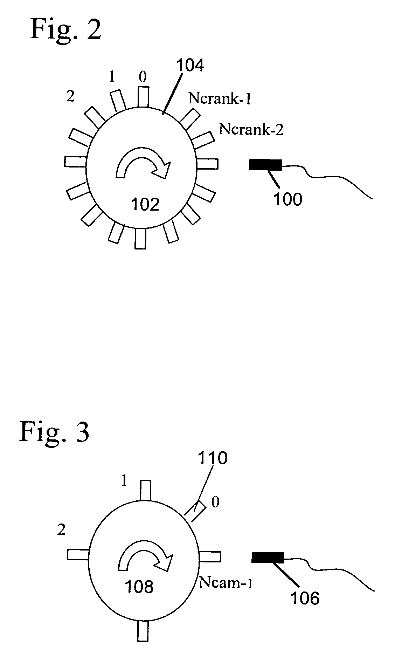

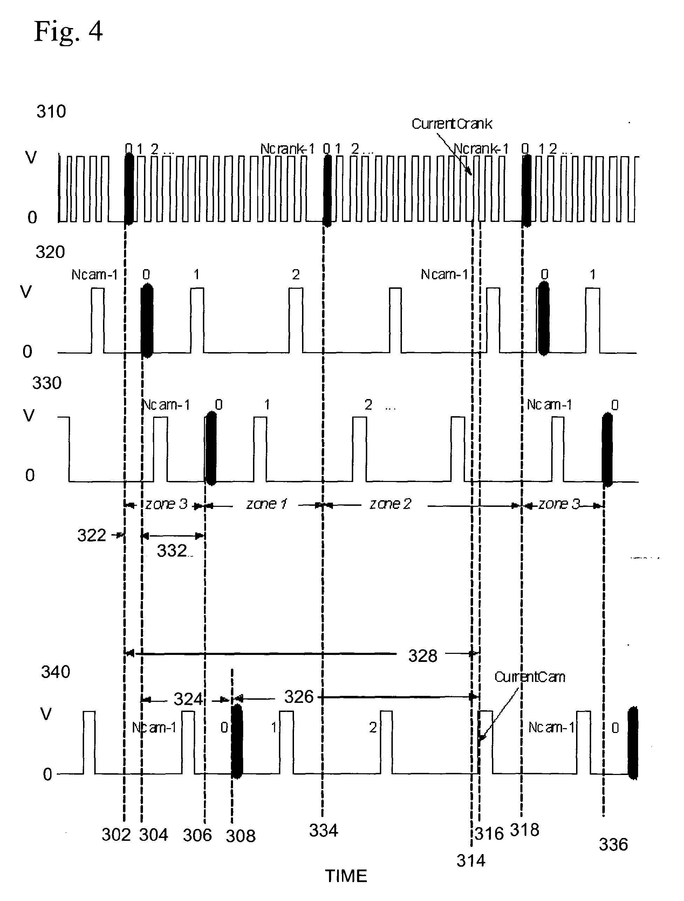

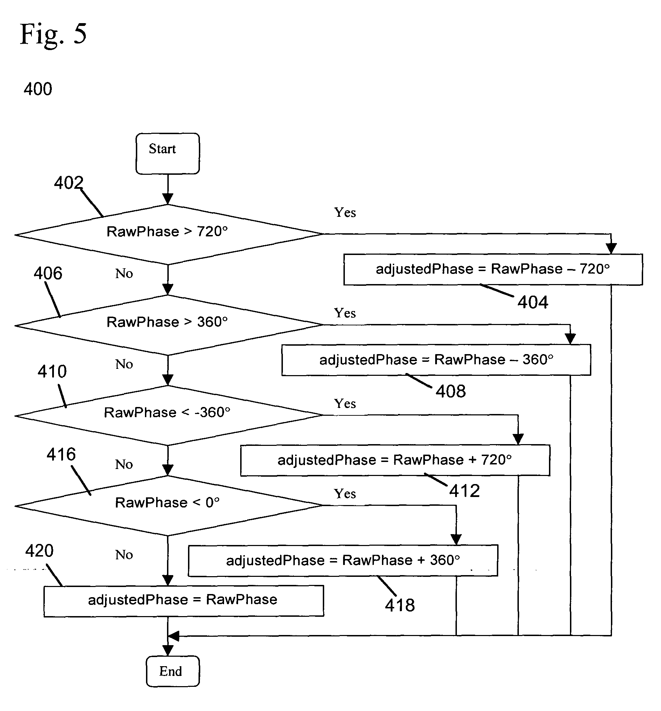

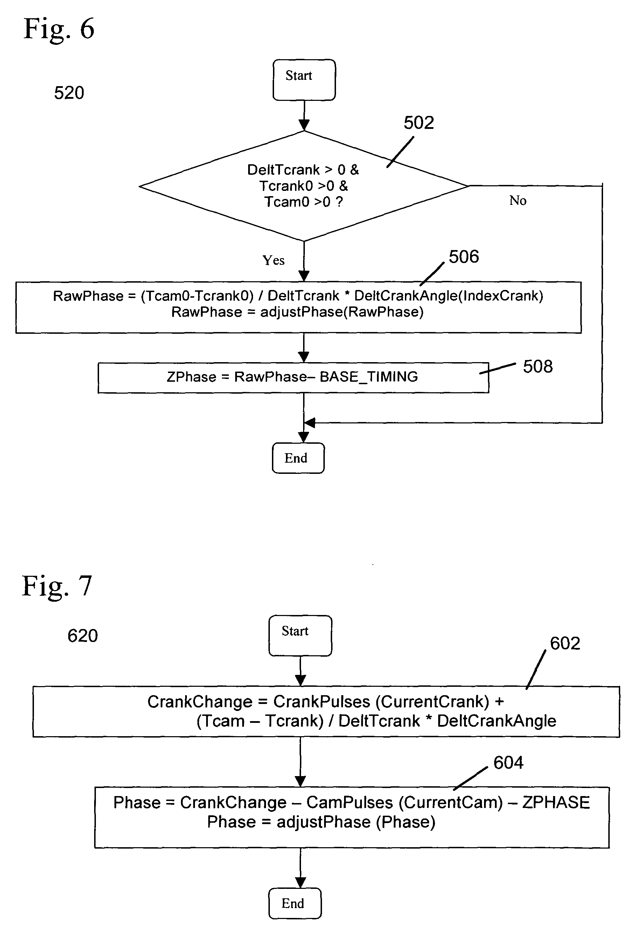

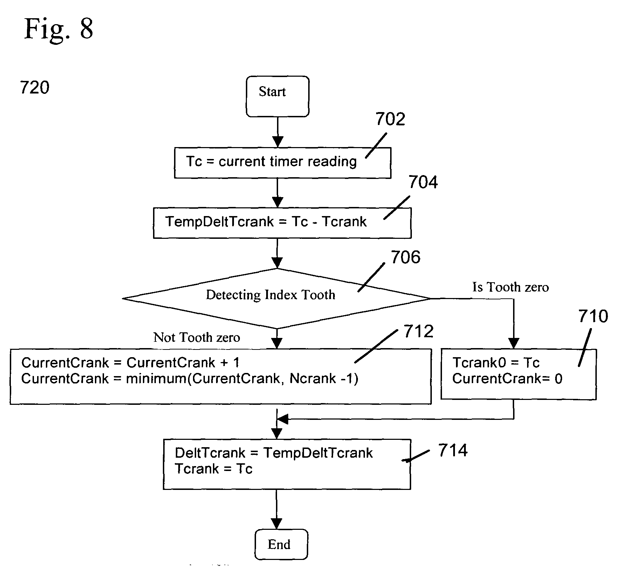

Figure 1 shows an overall flowchart of the method of the present invention. Box 200 of the flowchart of figure 1 corresponds to figures 2 and 3. Box 202, 204 and 206 correspond to figures 4, and 7. Box 208 and 210 corresponds to figure 5. Box 212 corresponds to figures 8, 9, 10.

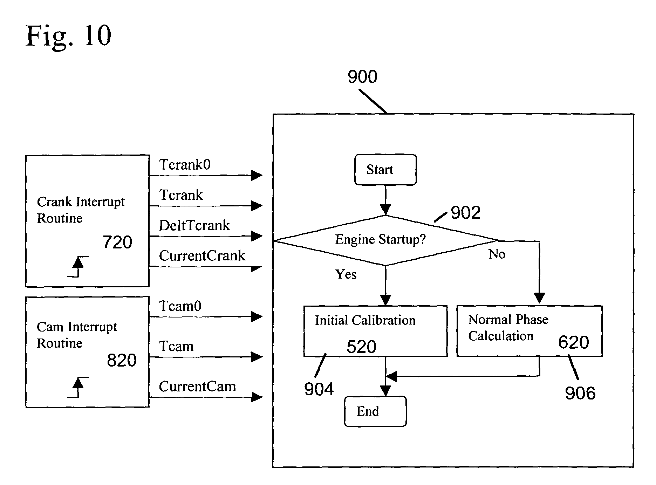

It is noted that Figure 10 is a better overall flowchart for this phase measurement method. There is no single data flow in this method. Instead, crank interrupt routine, cam interrupt routine, and main phase calculation may run asynchronized. The main phase calculation part (box 900 in figure 10) takes whatever the latest timing information available from the interrupt routine and calculate the final VCT phase. It is suggested to focus on Figure 10 in the above paragraph and supplement the Normal phase calculation (box 620) with figure 1. But Figure 1 need to do following modifications:

1. Box 208: changed to "compare calculated phase to a set of predetermined phase"

2. Box 212: to be removed. The phase calculation ends at Box 210. There is no need to apply the final phase back to somewhere.

DETECTING AN INDEX TOOTH

Fig. 2 shows a crank sensor wheel 102 attached to and rotating in synchronism with a crankshaft (not shown).

Fig. 3 shows a cam sensor wheel 108 attached to and rotating in synchronism with a camshaft (not shown). Voltage fluctuations are generated when the edge of the teeth mounted to the sensor wheels pass the pick-up sensors 100, 106. The voltage fluctuations are converted into a series of voltage pulses composed of either high or low voltage level. The index tooth may be a missing tooth 104 as shown in Figure 2, or an additional tooth 110, as shown in Figure 3. The additional tooth 110 or the tooth immediately after the missing tooth is labeled as zero and the following teeth as one, two, etc. The last tooth is numbered Ncrank-1 on the crank wheel and Ncam-1 on the cam wheel. Both the camshaft and the crankshaft may use either the missing tooth or the additional tooth or a combination of the two. The sensor wheels may have teeth equally or unequally spaced. The sensor wheels may also have an even or odd number of teeth. There is no requirement of equal spacing or odd number of teeth.

Figure 4 shows cam and crank pulses identified by the pickup sensors. Each of the pulse series shows voltage versus time. The darkened pulses are generated when tooth zero passes the pickup sensors. Pulse series 310 shows the pulses from almost three revolutions of the crank wheel 102. The time interval between the pulse for the Ncrank-1 tooth and tooth zero is about twice as long as the time intervals immediately prior. Pulse series 320, 330, and 340 show different pulses generated from the cam wheel 108 depending on the start position or phase angle of the camshaft relative to the crankshaft. The time interval between the pulse for the Ncam-1 tooth and tooth zero is about half the time interval of the time interval immediately prior. From the above information, the index tooth may be detected as follows:

For a pulse wheel that has an additional tooth, the following pseudo-code applies:

*If        0.25 * Old Pulse Interval < Current Pulse Interval < 0. 75 * Old Pulse Interval*
*Then        Current tooth is tooth zero*

For a pulse wheel that has a missing tooth:

*If        Current Pulse Interval > 1.5 * Old Pulse Interval*
*Then        Current tooth is tooth zero*

A priori knowledge is used to select one or the other of these routines for each pulse wheel.

As can be seen, the measuring or control accuracy of the present invention is determined by the timing between two consecutive pulses of the pulse wheel disposed to generate more usable pulses than the other pulse wheel. By way of an example, since crank shaft wheel generates more pulses than the cam shaft wheel, the accuracy of the system is determined by the time segment, delta t, between the two consecutive crank pulses, be they the rising or falling edge, or any other points of reference relating the crank pulses.

AUTOMATIC INITIAL CALIBRATION

The camshaft, attached to the rotor which has one or more vanes is moving to an advance position when the camshaft is catching up to the crankshaft. The resulting time interval between the cam pulse zero and the crank pulse zero (the darkened pulses) decreases. The initial angular position of the VCT phaser during engine cranking is defined as BASE_TIMING. BASE_TIMING is zero when the phaser is at the fully retarded position. Alternatively, the initial angular position of the phaser may be locked anywhere between the fully advanced position and the fully retard position during engine cranking. However, the initial angular position needs to be known at least to a controller for controlling the VCT system. The controller may be part of the engine control unite (ECU) or a separate VCT controller working in conjunction with the main control unit such as the ECU. The pulse series representative of the camshaft when it is in the fully advance position and BASE_TIMING is zero is pulse series 320. The pulse series representative of the camshaft when it is not in the fully advance position and BASE_TIMING is not zero is pulse series 330. The pulse series representative of the camshaft when it is in an arbitrary operating position is pulse series 340.

Each revolution of the crankshaft starts with tooth zero. The leading edge of the pulse generated by the detection of tooth zero on the crank sensor wheel 102 is $Tcrank0_x$. The first revolution is $Tcrank0_1$ 302, the second revolution is $Tcrank0_2$ 334, $Tcrank0_3$ 318 etc... Tcrank0 refers to the start time of pulse zero in the current revolution of the crankshaft. The leading edge of the pulse generated by the detection of the tooth zero on the cam sensor wheel 108 is $Tcam0_x$. The first revolution is $Tcam0_1$ 306, the second revolution is $Tcam0_2$ 336, etc...Tcam0 refers to the start time of pulse zero in the current revolution of the camshaft. ZPHASE 322 is the relative angle, not the time interval, between cam tooth zero and the crank tooth zero when the camshaft is at the fully advanced position or BASE_TIMING is zero. When the phaser is not at the fully advance position during engine cranking, as shown in pulse series 330, ZPHASE 322 is the initial relative angle between cam tooth zero and the crank tooth zero, subtracting BASE_TIMING 332.

There may be cases after engine assembly where the fully advanced crank/cam pulses are not related as in series 310 and 320 due to pulse wheel misalignment. This situation is corrected as follows. ZPHASE 322, the measured angle by which the crank leads the fully advanced cam is automatically calculated during engine startup as part of an automatic initial calibration routine. Tcrank0, for example line 302, is updated and the time is recorded the moment crank tooth zero is detected. Tcam0, for example line 304 is updated and the time is recorded the moment cam tooth zero is detected. Tcrank0 is updated twice as often as Tcam0 since the crankshaft rotates two revolutions for every camshaft revolution. The time interval between two consecutive crank pulses is DeltTcrank and the angle between the two corresponding teeth is DeltCrankAngle.

Based on the camshaft tooth zero pulses, relative to the crankshaft zero pulses, the time period between two consecutive cam pulse zero events, for example $Tcam0_1$, line 306 and $Tcam0_2$, line 336, may be divided into three zones as shown in Figure 4, pulse series 330. The automatic calibration of ZPHASE may take place in any of the three zones. If the automatic calibration of ZPHASE is carried out in zone 1, then the timing information is updated for $Tcam0_1$ and $Tcrank0_1$ and

$$ZPHASE = DeltCrankAngle \,/\, DeltTcrank * (Tcam0_1 - Tcrank0_1).$$

If the calibration is takes place in zone 2, the timing information is updated for $Tcam0_1$ and $Tcrank0_2$, and

$$ZPHASE = DeltCrankAngle \,/\, DeltTcrank * (Tcam0_1 - Tcrank0_2) + 360°.$$

If the calibration is takes place in zone 3, then the timing information is updated for $Tcam0_1$ and $Tcrank0_3$, and

$$ZPHASE = DeltCrankAngle \,/\, DeltTcrank * (Tcam0_1 - Tcrank0_3) + 720°.$$

The above three cases may be combined together and computer program may be used, resulting in:

$$RawPhase = DeltCrankAngle \,/\, DeltTcrank * (Tcam0 - Tcrank0)$$

$$ZPHASE = adjustPhase (Raw Phase).$$

Figure 6 shows the flowchart for the automatic initial calibration 520. In step 502, if Tcrank0, Tcam0, and DeltTcrank are not greater than 0, then the calibration proceeds to the end of the routine. By doing so, the "divided by zero" error in computer calculation is avoided. In addition, this prevents an erroneous phase computation before at least two crank teeth have registered times and a valid Tcam0 and Tcrank0 have been established. If Tcrank0, Tcam0, and DeltTcrank are greater then 0, then RawPhase and adjustPhase are calculated in step 506. RawPhase is calculated in step 506 either within 0 to 360° or offset by a multiple of 360°. Subroutine adjustPhase is excuted to add or subtracted the multiple from RawPhase to obtain the correct phase.

Figure 5 contains the flowchart 400 for subroutine adjustPhase. In step 402, if the RawPhase is greater than 720°, then the routine proceeds to step 404, where adjustPhase is equal to RawPhase -720° and the subroutine ends. If RawPhase is not greater than 720°, then the routine proceeds to step 406. In step 406, if the RawPhase is greater 360°, then the routine proceeds to step 408 and adjustPhase is equal to RawPhase-360° and the routine ends. If RawPhase is not greater than 360°, then the routine proceeds to step 410. In step 410, if RawPhase is less then -360°, then the routine proceeds to step 412 and adjustPhase is equal to RawPhase + 720° and the routine ends. If RawPhase is not less then -360°, then the routine proceeds to step 416. In step 416, if RawPhase is less then 0°, then the routine proceeds to step 418 and adjustPhase is equal to RawPhase + 360° and the routine ends. If RawPhase is not less then 0°, then the routine proceeds to step 420, where adjustedPhase is equal to RawPhase. Once routine 400, shown in Figure 5, ends, RawPhase is set to the adjustPhase result and the automatic initial calibration routine 520 proceeds step 508, where

$$ZPHASE = RawPhase - BASE\_TIMING.$$

Automatic initial calibration only runs during every time engine startup or runs again in case of system failure that loses or alters the correct ZPHASE.

VCT PHASE CALCULATION DURING NORMAL OPERATING CONDITIONS

Figure 7 shows the flowchart for phase calculation during normal operating conditions. Normal operating condition follows startup condition after ZPhase has been calculated The relative angle between any tooth on the sensor wheel and tooth zero measured in crank degrees is predetermined based on the geometry of the sensor wheel. For the cam tooth wheel with Ncam equally spaced teeth, the angles are:

$$CamPulses\ (0, 1, ..., Ncam\ \text{-}1) = [0, A1, A2, ..., A_{Ncam\text{-}1}]$$

where A= 720/Ncam.
For example, the angles of a camshaft tooth wheel with four evenly spaced teeth and one additional tooth (as shown in Figure 2) may be defined as:

$$CamPulses\ (0, 1, 2, 3, 4) = [0, 90, 270, 450, 630].$$

The angle of a camshaft tooth wheel with five teeth and one additional tooth may be defined as:

$$CamPulses\ (0, 1, 2, 3, 4, 5) = [0, 72, 216, 360, 504, 648].$$

For a crank tooth wheel with Ncrank teeth, the angles are:

$$CrankPulses\ (0, 1, ..., Ncrank\text{-}1) = [0, B1, B2, ..., B_{ncrank\text{-}1}]$$

where B = 360/Ncrank.
For example, the angles of a crankshaft tooth wheel with fifteen evenly spaced teeth and one missing tooth ( as shown in Figure 2) may defined as:

$$CrankPulses\ (0, 1, 2,3 ...13, 14, 15) = [0,22.5,45,67.5 ..., 292.5, 315, 337.5]$$

The angular difference between two crank pulses is:

$$DeltCrankAngle\ (n) = 360° \text{-}\ CrankPulses\ (16), \qquad n = 0$$

$$DeltCrankAngle\ (n) = CrankPulses\ (n) \text{-}\ CrankPulses\ (n\text{-}1), \qquad n > 0$$

Note that tooth does not have to be equally spaced to apply this invention since every individual tooth angle is tracked by *DeltCrankAngle(n).* The moment the crank tooth is detected the time is recorded and updated for Tcrank. The index of the current crank tooth is recorded and updated as CurrentCrank. The moment the cam tooth is detected the time is recorded and updated for Tcam. The index of current cam tooth is recorded and updated as CurrentCam. At the time of Tcam, the number of complete crank pulses that have passed since the last crank tooth zero is CurrentCrank. The duration of a current complete crank pulse is the time interval between the most recent two successive Tcrank measurements:

$$DeltTcrank = New\ Tcrank\ \text{-}\ Old\ Tcrank$$

By using known crank angular position at time Tcrank0 as the starting point, the absolute crank angular position at time Tcam may be determined. The crank angular position change from the current time Tcrank0 to the latest time Tcam is equal to CrankChange 328:

$$CrankChange = CrankPulses\ (CurrentCrank) +$$

$$(Tcam - Tcrank)\ /\ DeltTcrank * DeltCrankAngle\ (CurrentCrank)$$

as shown in step 602 of the flowchart in Figure 7. Using the cam angular positions at time Tcam0 as the starting point, the absolute cam angular position at time Tcam may be determined, thus giving an "absolute" position. The cam angular position change from the latest time Tcam0 to the latest time Tcam equals CamPulses (CurrentCam), where Current-Cam is an integer index. The VCT phase at time Tcam is:

$$Phase = CrankChange - CamPulses\ (CurrentCam) - ZPHASE$$

$$Phase = adjustPhase\ (Phase)$$

as shown in step 604 of the flowchart in Figure 7.

IMPLEMENTING ABSOLUTE POSITION TRACKING PHASE MEASUREMENT METHOD IN A MICRO-CONTROLLER

One module that may be used to implement the above method in a computer is a crank interrupt service routine used to track crank tooth timing and the index of current crank pulses. Figure 8 shows a flowchart for the crank interrupt service routine 720. Step 702 is triggered every time the computer detects a rising or falling edge, depending on the computer, of the crank pulse. The current crank pulse is calculated in step 704, where,

$$TempDeltTcrank = Tc - Tcrank$$

TempDeltTcrank compares the old crank pulse interval DeltTcrank using the method above in Detecting An Index Tooth, step 706. If the comparison indicates that the current tooth generating the crank pulse is tooth zero, then Tcrank0 and Tcrank are updated as shown in step 710. If the crank pulse is not indicative of tooth zero, then Tcrank0 is not updated. To increase the index of the current crank tooth CurrentCrank is increased by one each time a pulse comes in, as shown in step 712. CurrentCrank is reset back to zero when the tooth zero is detected. In step 714, old DeltTcrank is updated and set to be equal to TempDeltTcrank and old Tcrank is updated and set to be equal to the current timer reading. By running the routine 720, shown in Figure 8 for each crank tooth throughout every crank revolution, and resetting CurrentCrank, the present invention is able to self correct any false triggers that may accidentally introduce noises from various sources.

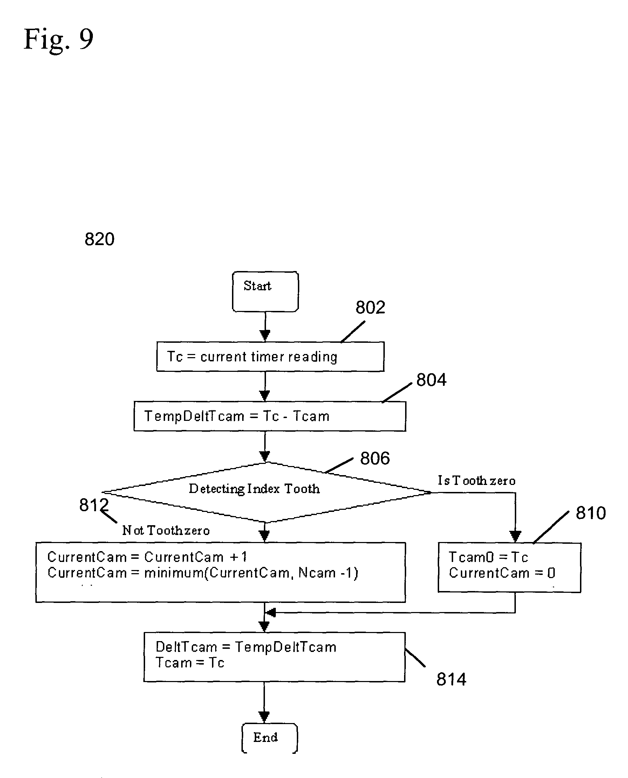

Another module that may be used to implement the above method in a computer is a cam interrupt service routine used to track cam tooth timing and the index of current cam pulses. Figure 9 shows a flowchart for the cam interrupt service routine 820. Step 802 is triggered every time the computer detects a rising or falling edge, depending on the computer, of the cam pulse. The current cam pulse is calculated in step 804, where

$$TempDeltTcam = Tc - Tcam$$

TempDeltTcam compares the old cam pulse interval DeltTcam using the method above in Detecting An Index Tooth, step 806. If the comparison indicates that the current tooth generating the cam pulse is tooth zero, then Tcam0 and Tcam are updated as shown in step 810. If the cam pulse is not indicative of tooth zero, then Tcam0 is not updated. To increase the index of the current cam tooth CurrentCam is increased by one each time a pulse comes in, as shown in step 812. CurrentCam is reset back to zero when the tooth zero is detected. In step 814, old DeltTcam is updated and set to be equal to TempDeltTcam and old Tcam is updated and set to be equal to the current timer reading. By running the routine shown in Figure 9 for each cam pulse throughout every cam revolution, and resetting CurrentCam, the present invention is able to self correct any false triggers that may accidentally introduce noises from various sources.

The third module that may be used to implement the above method in a computer is a phase calculation routine used to actually calculate the phase or perform initial calibration. The flowchart for the phase calculation routine is shown in Figure 10, and indicated by reference number 900. The phase calculation routine 900 is usually executed in the main control loop for a micro-controller application to reduce the overhead it would otherwise experience if it were executed within an interrupt routine. In step 902, it is determined whether the engine has just started or has been continually running. If the engine has just started the computer performs initial calibration in step 904 which is equivalent to routine 520 shown in Figure 6. After the engine has been running, the computer would calculate the phase using normal phase calculation shown in step 906, equivalent to routine 620 shown in Figure 7. Figure 10 also shows a possible interface between the three modules, crank interrupt routine, cam interrupt routine, and phase calculation routine.

One embodiment of the invention is implemented as a program product for use with a vehicle computer system such as, for example, the flowcharts shown in Figs 1 through 10 and described below. The program(s) of the program product defines functions of the embodiments (including the methods described below with reference to Fig. 9 and can be contained on a variety of signal-bearing media. Illustrative signal-bearing media include, but are not limited to: (i) information permanently stored on in-circuit programmable devices like PROM, EPROM, etc; (ii) information permanently stored on non-writable storage media (*e.g.*, read-only memory devices within a computer such as CD-ROM disks readable by a CD-ROM drive); (iii) alterable information stored on writable storage media (*e.g.*, floppy disks within a diskette drive or hard-disk drive); (iv) information conveyed to a computer by a communications medium, such as through a computer or telephone network, including wireless communications, or a vehicle controller of an automobile. Such signal-bearing media, when carrying computer-readable instructions that direct the functions of the present invention, represent embodiments of the present invention.

In general, the routines executed to implement the embodiments of the invention, whether implemented as part of an operating system or a specific application, component, program, module, object, or sequence of instructions may be referred to herein as a "program". The computer program typically is comprised of a multitude of instructions that will be translated by the native computer into a machine-readable format and hence executable instructions. Also, programs are comprised of variables and data structures that either reside locally to the program or are found in memory or on storage devices. In addition, various programs described hereinafter may be identified based upon the application for which they are implemented in a specific embodiment of the invention. However, it should be appreciated that any particular program nomenclature that follows is used merely for convenience, and thus the invention should not be limited to use solely in any specific application identified and/or implied by such nomenclature.

The following are terms and concepts relating to the present invention.

It is noted the hydraulic fluid or fluid referred to supra are actuating fluids. Actuating fluid is the fluid which moves the vanes in a vane phaser. Typically the actuating fluid includes engine oil, but could be separate hydraulic fluid. The VCT system of the present invention may be a Cam Torque Actuated (CTA), Torsion Assist (TA) or Oil Pressure Acutated (OPA). A CTA is a VCT system in which a VCT system that uses torque reversals in camshaft caused by the forces of opening and closing engine valves to move the vane. The control valve in a CTA system allows fluid flow from advance chamber to retard chamber, allowing the vane to move, or stops flow, locking the vane in position. The CTA phaser may also have oil input to make up for losses due to leakage, but does not use engine oil pressure to move phaser. Vane is a radial element actuating fluid acts upon, housed in chamber. A vane phaser is a phaser which is actuated by vanes moving in chambers.

In OPA or TA phasers, the engine oil pressure is applied to one side of the vane or the other, in the retard or advance chamber, to move the vane. The TA phaser adds check valves either one in each supply line to each chamber or one in the engine oil supply line to the spool valve. The check valves block oil pressure pulses due to torque reversals from propagating back into the oil system, and stop the vane from moving backward due to torque reversals. Motion of the vane due to forward torque effects is permitted.

There may be one or more camshaft per engine. The camshaft may be driven by a belt or chain or gears or another camshaft. Lobes may exist on camshaft to push on valves. In a multiple camshaft engine, most often has one shaft for exhaust valves, one shaft for intake valves. A "V" type engine usually has two camshafts (one for each bank) or four (intake and exhaust for each bank).

The chamber is defined as a space within which vane rotates. The chamber may be divided into the advance chamber (makes valves open sooner relative to crankshaft) and theretard chamber (makes valves open later relative to crankshaft). A check valve is defined as a valve which permits fluid flow in only one direction. A closed loop is defined as a control system which changes one characteristic in response to another, then checks to see if the change was made correctly and adjusts the action to achieve the desired result (e.g. moves a valve to change phaser position in response to a command from the ECU, then checks the actual phaser position and moves valve again to correct position). Control valve is a valve which controls flow of fluid to phaser. The control valve may exist within the phaser in CTA system. Control valve may be actuated by oil pressure or solenoid. Crankshaft takes power from pistons and drives transmission and camshaft. Spool valve is defined as the control valve of spool type. Typically the spool rides in bore, connects one passage to another. Most often the spool is located on center axis of rotor of a phaser.

Driven shaft is any shaft which receives power (in VCT, most often camshaft). Driving shaft is any shaft which supplies power (in VCT, most often crankshaft, but could drive one camshaft from another camshaft). ECU is Engine Control Unit that is the car's computer. Engine Oil is the oil used to lubricate engine, pressure can be tapped to actuate phaser through control valve.

Housing is defined as the outer part of phaser with chambers. The outside of housing can be pulley (for timing belt), sprocket (for timing chain) or gear (for timing gear). Hydraulic fluid is any special kind of oil used in hydraulic cylinders, similar to brake fluid or power steering fluid. Hydraulic fluid is not necessarily the same as engine oil. Typically the present invention uses "actuating fluid". Lock pin is disposed to lock a phaser in position. Usually lock pin is used when oil pressure is too low to hold phaser, as during engine start or shutdown.

Oil Pressure Actuated (OPA) VCT system uses a conventional phaser, where engine oil pressure is applied to one side of the vane or the other to move the vane.

Open loop is used in a control system which changes one characteristic in response to another (say, moves a valve in response to a command from the ECU) without feedback to confirm the action.

Phase is defined as the relative angular position of camshaft and crankshaft (or camshaft and another camshaft, if phaser is driven by another cam). A phaser is defined as the entire part which mounts to cam. The phaser is typically made up of rotor and housing and possibly spool valve and check valves. A piston phaser is a phaser actuated by pistons in cylinders of an internal combustion engine. Rotor is the inner part of the phaser, which is attached to a cam shaft.

Sprocket is a member used with chains such as engine timing chains. Timing is defined as the relationship between the time a piston reaches a defined position (usually top dead center (TDC)) and the time something else happens. For example, in VCT or VVT systems, timing usually relates to when a valve opens or closes. Ignition timing relates to when the spark plug fires.

Torsion Assist (TA) or Torque Assisted phaser is a variation on the OPA phaser, which adds a check valve in the oil supply line (i.e. a single check valve embodiment) or a check valve in the supply line to each chamber (i.e. two check valve embodiment). The check valve blocks oil pressure pulses due to torque reversals from propagating back into the oil system, and stop the vane from moving backward due to torque reversals. In the TA system, motion of the vane due to forward torque effects is permitted; hence the expression "torsion assist" is used. Graph of vane movement is step function.

VCT system includes a phaser, control valve(s), control valve actuator(s) and control circuitry. Variable Cam Timing (VCT) is a process, not a thing, that refers to controlling and/or varying the angular relationship (phase) between one or more camshafts, which drive the engine's intake and/or exhaust valves. The angular relationship also includes phase relationship between cam and the crankshafts, in which the crank shaft is connected to the pistons.

Variable Valve Timing (VVT) is any process which changes the valve timing. VVT could be associated with VCT, or could be achieved by varying the shape of the cam or the relationship of cam lobes to cam or valve actuators to cam or valves, or by individually controlling the valves themselves using electrical or hydraulic actuators. In other words, all VCT is VVT, but not all VVT is VCT.

Accordingly, it is to be understood that the embodiments of the invention herein described are merely illustrative of the application of the principles of the invention. Reference herein to details of the illustrated embodiments is not intended to limit the scope of the claims, which themselves recite those features regarded as essential to the invention.

**Claims**

**1.** In a system having a first rotating shaft, a second rotating shaft, and a phaser interposed between the first shaft and the second shaft, each shaft having a pulse wheel rigidly affixed onto the shaft disposed to generate pulses based upon the characteristics of the pulse wheel, a method is provided for measuring the phase relationship between the two shafts, comprising:

providing a first index means on the first pulse wheel;

providing a second index means on the second pulse wheel;

generating a first sequence of pulses based upon the characteristics of the first pulse wheel including the first index means thereon;

generating a second sequence of pulses based upon the characteristics of the second pulse wheel including the second index means thereon; and

determining a phase relationship between the two shafts based on part, or all pulses generated by the two pulse wheels, thereby having a measurement accuracy determined by the wheel that generates the most pulses.

**2.** The method of claim 1, further comprising determining whether an engine including the first and second shafts is in a start up state or otherwise.

**3.** The method of claim 1 or 2, further comprising providing a controller for controlling the generated sequences of pulses.

**4.** The method of claim 1, 2 or 3, wherein the first index means is either a tooth or a missing tooth.

**5.** The method of any one of claims 1 to 4, wherein the second index means is either a tooth or a missing tooth.

**6.** The method of any one of claims 1 to 5, wherein the phase relationship is between 0-360 degrees.

**7.** The method of any one of claims 1 to 6, further comprising providing a controller for controlling the first and the second sequences and determining the phase relationship.

**8.** The method of any one of claims 1 to 7, wherein the first shaft is a cam shaft.

**9.** The method of any one of claims 1 to 8, wherein the second shaft is a crank shaft.

**10.** A method for tracking absolute angular positions of both a camshaft and a crankshaft of variable camshaft timing system having a phaser for an internal combustion engine having at least one camshaft comprising the steps of:

   a) sensing an index tooth on a cam sensor wheel and a crank sensor wheel, wherein the sensor wheels have a plurality teeth including the index tooth;

   b) calculating the absolute cam position and an absolute crank position;

   c) calculating the phase between the cam and the crank;

   d) comparing the calculated phase to a set of predetermined phases;

   e) calculating the adjusted phase; and

   f) applying the adjusted phase to the cam and crank.

**11.** The method of claim 10 further comprising repeating steps a) through d).

**12.** The method of claim 10 or 11, wherein the index tooth is an additional tooth on the sensor wheels.

**13.** The method of claim 10 or 11, wherein the index tooth is at least one missing tooth on the sensor wheels.

**14.** The method of any one of claims 10 to 13, wherein calculating the absolute cam position and absolute crank position further comprises the steps of:

   a) counting the index of current crank tooth;

   b) counting the index of current cam tooth;

   c) detecting the time stamp of Tcrank for the latest crank pulse;

   c) detecting the time stamp of Tcam for the latest cam pulse ;

   d) calculating Absolute crank angle change since last time detecting crank tooth zero ; and

   e) calculating Absolute cam angle change since last time detecting cam tooth zero.

**15.** The method of any one of claims 10 to 14, wherein the step of calculating the phase between the cam and the crank further comprises the steps of

a) calculating BASE_TIMING, the initial angular position of the phaser during engine startup;

b) calculating ZPHASE, the initial relative angle between the index tooth of the cam sensor wheel and the crank sensor wheel minus BASE_TIMING;

c) calculating the time period between the consecutive sensing of the index tooth of the cam sensor wheel relative to the sensing of the index tooth on the crank sensor wheel; and

d) calculating the phase by subtracting cam angle change and ZPHASE from crank angle change.

# Fig. 1

```
Sensing Index Teeth On      ⟋200
Cam and Crank Sensor
Wheels

Calculating Absolute        ⟋202
Cam Position

Calculating Absolute        ⟋204
Crank Position

Calculating Phase           ⟋206
```

Apply Adjusted Phase
212

Calculate Adjusted Phase
210

Compare Calculated Phase To Desired Phase
208

## Fig. 2

## Fig. 3

# Fig. 4

## Fig. 5

400

```
        ┌──────┐
        │ Start │
        └──────┘
            │
   402      ▼
        ╱RawPhase > 720°╲──── Yes ───────────────────────────────┐
        ╲              ╱                                          │
   406     │ No                    ┌─────────────────────────────────────┐
        ▼                          │ adjustedPhase = RawPhase – 720°      │
        ╱RawPhase > 360°╲──── Yes  └─────────────────────────────────────┘
        ╲              ╱                        ╲ 404
   410     │ No                    ┌─────────────────────────────────────┐
        ▼                          │ adjustedPhase = RawPhase – 360°      │
        ╱RawPhase < -360°╲── Yes   └─────────────────────────────────────┘
        ╲               ╱                       ╲ 408
   416     │ No                    ┌─────────────────────────────────────┐
        ▼                          │ adjustedPhase = RawPhase + 720°      │
        ╱RawPhase < 0°╲──── Yes    └─────────────────────────────────────┘
        ╲            ╱                           ╲ 412
   420     │ No                    ┌─────────────────────────────────────┐
        ▼                          │ adjustedPhase = RawPhase + 360°      │
   ┌──────────────────────┐        └─────────────────────────────────────┘
   │ adjustedPhase = RawPhase │                 ╲ 418
   └──────────────────────┘
            │
            ▼
        ┌──────┐
        │ End  │
        └──────┘
```

## Fig. 6

520

```
Start
```

502

DeltTcrank > 0 &
Tcrank0 >0 &
Tcam0 >0 ?

No

Yes

506

RawPhase = (Tcam0-Tcrank0) / DeltTcrank * DeltCrankAngle(IndexCrank)
RawPhase = adjustPhase(RawPhase)

508

ZPhase = RawPhase– BASE_TIMING

```
End
```

## Fig. 7

620

```
Start
```

602

CrankChange = CrankPulses (CurrentCrank) +
(Tcam – Tcrank) / DeltTcrank * DeltCrankAngle

604

Phase = CrankChange – CamPulses (CurrentCam) – ZPHASE
Phase = adjustPhase (Phase)

```
End
```

# Fig. 8

720

```
                        ┌─────────┐
                        │  Start  │
                        └─────────┘
                             │
                             ▼                        702
              ┌──────────────────────────────┐
              │  Tc = current timer reading   │
              └──────────────────────────────┘
                             │                        704
                             ▼
              ┌──────────────────────────────┐
              │  TempDeltTcrank = Tc - Tcrank │
              └──────────────────────────────┘
                             │                        706
                             ▼
              ◇──────────────────────────────◇
              │     Detecting Index Tooth     │      Is Tooth zero
              ◇──────────────────────────────◇
                  │                                        │
          Not Tooth zero                                   │              710
                  ▼                     712                ▼
 ┌────────────────────────────────────────┐   ┌────────────────────┐
 │ CurrentCrank = CurrentCrank + 1         │   │ Tcrank0 = Tc       │
 │ CurrentCrank = minimum(CurrentCrank,    │   │ CurrentCrank= 0    │
 │                        Ncrank -1)       │   └────────────────────┘
 └────────────────────────────────────────┘
                             │
                             ▼
              ┌──────────────────────────────┐
              │ DeltTcrank = TempDeltTcrank   │        714
              │ Tcrank = Tc                   │
              └──────────────────────────────┘
                             │
                             ▼
                        ┌─────────┐
                        │   End   │
                        └─────────┘
```

# Fig. 9

820

```
                         ┌─────────┐
                         │  Start  │
                         └─────────┘
                              │            802
                              ▼
              ┌──────────────────────────────┐
              │  Tc = current timer reading   │
              └──────────────────────────────┘
                              │            804
                              ▼
              ┌──────────────────────────────┐
              │  TempDeltTcam = Tc - Tcam     │
              └──────────────────────────────┘
                              │            806
                              ▼
              ╱◇◇◇◇◇◇◇◇◇◇◇◇◇◇◇◇◇◇◇◇◇◇◇◇◇╲
             ◇    Detecting Index Tooth    ◇ ──── Is Tooth zero
              ╲◇◇◇◇◇◇◇◇◇◇◇◇◇◇◇◇◇◇◇◇◇◇◇◇◇╱                    810
       812      │
      Not Toothzero
                │                                       ▼
  ┌──────────────────────────────────────────┐  ┌──────────────────┐
  │ CurrentCam = CurrentCam + 1               │  │ Tcam0 = Tc       │
  │ CurrentCam = minimum(CurrentCam, Ncam -1) │  │ CurrentCam = 0   │
  └──────────────────────────────────────────┘  └──────────────────┘
                │                                       │
                ▼◄──────────────────────────────────────┘
  ┌──────────────────────────────────────────┐
  │ DeltTcam = TempDeltTcam                   │
  │ Tcam = Tc                                 │       814
  └──────────────────────────────────────────┘
                │
                ▼
           ┌─────────┐
           │   End   │
           └─────────┘
```

# Fig. 10

900

| Crank Interrupt Routine 720 | Tcrank0 |
| Tcrank |
| DeltTcrank |
| CurrentCrank |

| Cam Interrupt Routine 820 | Tcam0 |
| Tcam |
| CurrentCam |

Start

902

Engine Startup?

Yes                No

Initial Calibration 520                Normal Phase Calculation 620

904                906

End

**EP 1 512 845 A1**

European Patent Office

**EUROPEAN SEARCH REPORT**

Application Number

EP 04 25 4912

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,X | US 6 609 498 B2 (MATHEWS DAVID STEWART ET AL) 26 August 2003 (2003-08-26) * the whole document * | 1-9 | F01L1/34 F02D41/34 G01D5/245 |
| X | EP 0 581 508 A (FORD WERKE AG ; FORD FRANCE (FR); FORD MOTOR CO (GB)) 2 February 1994 (1994-02-02) * column 2, line 55 - column 4, line 18 * * column 5, lines 20-31 * * column 6, lines 21-26 * | 1 | |
| X | EP 0 582 430 A (FORD WERKE AG ; FORD FRANCE (FR); FORD MOTOR CO (GB)) 9 February 1994 (1994-02-09) * the whole document * | 1 | |
| Y | US 6 302 085 B1 (SEKINE MANABU ET AL) 16 October 2001 (2001-10-16) * column 7, line 16 - column 8, line 41; figures 6,7 * | 10-14 | |
| Y | EP 0 787 892 A (FORD MOTOR CO) 6 August 1997 (1997-08-06) * claim 1; figure 1 * | 10-14 | TECHNICAL FIELDS SEARCHED (Int.Cl.7) F01L F02D G01D |
| A | US 5 289 805 A (EKDAHL EARL W ET AL) 1 March 1994 (1994-03-01) * column 4, line 28 - column 6, line 31; figures 1g,1h * | 10-15 | |
| A | US 5 245 968 A (PAO HSIEN C ET AL) 21 September 1993 (1993-09-21) * the whole document * | 1,10 | |
| A | US 5 462 022 A (USHIDA MASAYASU) 31 October 1995 (1995-10-31) * figures 1-4 * | 10 | |

-/--

The present search report has been drawn up for all claims

| Place of search | Date of completion of the search | Examiner |
|---|---|---|
| Munich | 17 December 2004 | Clot, P |

EPO FORM 1503 03.82 (P04C01)

**European Patent Office**

## EUROPEAN SEARCH REPORT

Application Number

EP 04 25 4912

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (Int.Cl.7) |
| A | US 5 548 995 A (PAO HSIEN C ET AL) 27 August 1996 (1996-08-27) * column 3, line 8 - column 4, line 34; figures 2a-2e * ----- | 1,10 | |
| | | | TECHNICAL FIELDS SEARCHED (Int.Cl.7) |

The present search report has been drawn up for all claims

| Place of search | Date of completion of the search | Examiner |
|---|---|---|
| Munich | 17 December 2004 | Clot, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................
& : member of the same patent family, corresponding document

EPO FORM 1503 03.82 (P04C01)

ANNEX TO THE EUROPEAN SEARCH REPORT
ON EUROPEAN PATENT APPLICATION NO. EP 04 25 4912

This annex lists the patent family members relating to the patent documents cited in the above-mentioned European search report.
The members are as contained in the European Patent Office EDP file on
The European Patent Office is in no way liable for these particulars which are merely given for the purpose of information.

17-12-2004

| Patent document cited in search report | | Publication date | Patent family member(s) | | Publication date |
|---|---|---|---|---|---|
| US 6609498 | B2 | 02-01-2003 | US | 2003000498 A1 | 02-01-2003 |
| EP 0581508 | A | 02-02-1994 | US | 5209202 A | 11-05-1993 |
| | | | DE | 69327273 D1 | 20-01-2000 |
| | | | DE | 69327273 T2 | 13-04-2000 |
| | | | EP | 0581508 A2 | 02-02-1994 |
| | | | JP | 6200816 A | 19-07-1994 |
| EP 0582430 | A | 09-02-1994 | US | 5245968 A | 21-09-1993 |
| | | | DE | 69306057 D1 | 02-01-1997 |
| | | | DE | 69306057 T2 | 20-03-1997 |
| | | | EP | 0582430 A1 | 09-02-1994 |
| | | | JP | 6173730 A | 21-06-1994 |
| US 6302085 | B1 | 16-10-2001 | JP | 11247676 A | 14-09-1999 |
| | | | JP | 11257147 A | 21-09-1999 |
| | | | JP | 11257148 A | 21-09-1999 |
| | | | DE | 19909050 A1 | 09-09-1999 |
| EP 0787892 | A | 06-08-1997 | US | 5680834 A | 28-10-1997 |
| | | | DE | 69620566 D1 | 16-05-2002 |
| | | | DE | 69620566 T2 | 26-09-2002 |
| | | | EP | 0787892 A1 | 06-08-1997 |
| US 5289805 | A | 01-03-1994 | US | 5184578 A | 09-02-1993 |
| | | | DE | 4307010 A1 | 07-10-1993 |
| | | | JP | 6042317 A | 15-02-1994 |
| US 5245968 | A | 21-09-1993 | DE | 69306057 D1 | 02-01-1997 |
| | | | DE | 69306057 T2 | 20-03-1997 |
| | | | EP | 0582430 A1 | 09-02-1994 |
| | | | JP | 6173730 A | 21-06-1994 |
| US 5462022 | A | 31-10-1995 | JP | 7150989 A | 13-06-1995 |
| US 5548995 | A | 27-08-1996 | DE | 4440656 A1 | 24-05-1995 |
| | | | GB | 2284685 A ,B | 14-06-1995 |
| | | | JP | 7180565 A | 18-07-1995 |